# EUROPÄISCHE PATENTANMELDUNG

(11) **EP 3 831 196 A1**
(43) Veröffentlichungstag der Anmeldung: **09.06.2021**
(21) Anmeldenummer: 20210034.3
(22) Anmeldetag: 26.11.2020
(51) Int. Cl.: A01G 13/02, A47G 7/08

(54) **BLUMENTOPFABDECKUNG**

(30) Priorität: 02.12.2019 DE 102019132668
(71) Anmelder: Javelona, Jeffrey, 71691 Feiburg am Neckar (DE)
(72) Erfinder: Javelona, Jeffrey, 71691 Feiburg am Neckar (DE)
(74) Vertreter: Nestler, Jan Hendrik

(57) **Zusammenfassung**

Eine Abdeckvorrichtung (1) für Pflanzenwurzelbereiche weist zwei Abdeckelemente (2, 3) auf, die in eine Einbringstellung (Fig. 2) für den Pflanzenwurzelbereich und in eine Abdeckstellung (Fig. 1) für den Pflanzenwurzelbereich verbringbar sind. Die Abdeckvorrichtung weist in der Abdeckstellung zumindest ein inneres Aufnahmevolumen (4, 5) für den Pflanzenwurzelbereich und zumindest einen Durchführungsbereich (11) für einen Pflanzenstängelbereich (7) auf.

## Beschreibung

Die Erfindung betrifft eine Abdeckvorrichtung für Pflanzenwurzeln, die zumindest zwei Abdeckelemente aufweist.

Topfpflanzen erfreuen sich seit vielen Jahrzehnten großer Beliebtheit. Ein Vorteil bei Topfpflanzen ist, dass diese beispielsweise gut in Innenräumen aufgestellt werden können. Häufig spricht man in einem solchen Fall auch von Zimmerpflanzen.

Ein weiterer Vorteil von Topfpflanzen ist, dass diese leicht von einem Ort an einen anderen verbracht werden können, einfach, indem man diese mitsamt dem Blumentopf bewegt. Dieser Vorteil wird beispielsweise beim Handeln mit Pflanzen genutzt (beispielsweise Verkauf von Pflanzen in Gartenbedarfsgeschäften). Aber auch beim schlussendlichen Besitzer der Pflanze kann eine leichte Transportierbarkeit der Pflanze von Vorteil sein, nämlich beispielsweise dann, wenn es sich um empfindliche Pflanzen handelt (frostempfindliche Pflanzen, nicht-winterharte Pflanzen und dergleichen). Dann besteht die Möglichkeit, diese in der wärmeren Jahreszeit im Garten aufzustellen, während diese im Falle niedriger Temperaturen in ausreichend warmen Innenräumen platziert werden können.

Ein Problem bei Topfpflanzen stellt jedoch das typischerweise geringe Volumen an Pflanzsubstrat (Pflanzenerde) dar. Dies bedingt eine entsprechend geringe Wasserspeicherfähigkeit des Pflanzentopfs. Dementsprechend müssen Topfpflanzen vergleichsweise häufig gegossen werden. Bei hohen Temperaturen kann zum Teil auch mehrfach am Tag ein Gießen erforderlich sein, was entsprechend aufwendig ist und als entsprechend nachteilig empfunden wird.

Auch ästhetisch werden die Pflanzentöpfe (Blumentöpfe) von Topfpflanzen von vielen Personen als eher kritisch angesehen. Dementsprechend wurden bereits in der Vergangenheit unterschiedlichste Vorschläge gemacht, die Ästhetik zu verbessern. Beispielsweise existieren heutzutage unterschiedlichste Arten von sogenannten Übertöpfen, die den eigentlichen Pflanzentopf verdecken und somit das Aussehen der eingetopften Topfpflanze optisch verbessern sollen. Funktionale Verbesserungen werden von derartigen Übertöpfen jedoch nicht erzielt.

Dementsprechend besteht die Aufgabe der Erfindung darin, eine Abdeckvorrichtung für Pflanzenwurzelbereiche vorzuschlagen. Insbesondere soll diese gegenüber im Stand der Technik bekannten Vorrichtungen verbessert sein bzw. verbesserte Eigenschaften aufweisen.

Die Erfindung löst diese Aufgabe.

Dabei wird eine Abdeckvorrichtung für Pflanzenwurzelbereiche vorgeschlagen, die zumindest zwei Abdeckelemente aufweist, welche in zumindest eine Einbringstellung für den Pflanzenwurzelbereich und in zumindest eine Abdeckstellung für den Pflanzenwurzelbereich verbringbar sind. Die Abdeckvorrichtung ist derart ausgebildet und eingerichtet, dass sie in der Abdeckstellung zumindest ein inneres Aufnahmevolumen für den Pflanzenwurzelbereich und zumindest einen Durchführungsbereich für einen Pflanzenstängelbereich aufweist. In der Einbringstellung sind die zumindest zwei Abdeckelemente derart zueinander positioniert, dass der Durchführungsbereich ausreichend groß ist, sodass eine (typische) Topfpflanze in die Abdeckvorrichtung eingebracht werden kann. Vorteilhaft ist es dabei, wenn die zumindest zwei Abdeckelemente so zueinander positioniert werden können, dass eine Art seitliche Zugangsöffnung entsteht, der Durchführungsbereich also seitlich nach außen hin offen ist. Dies ist jedoch nicht zwangsläufig erforderlich; gegebenenfalls kann es sich auch als ausreichend erweisen, wenn der Durchführungsbereich eine zwar geschlossene, jedoch ausreichend große Größe (insbesondere ausreichender Durchmesser) aufweist, sodass eine typische Topfpflanze eingebracht werden kann. Unabhängig von der konkreten Bauausführung ist die Einbringstellung typischerweise dahingehend zu verstehen, dass eine in einem Pflanzentopf befindliche Pflanze von außen her derart in die Abdeckvorrichtung eingebracht werden kann, dass diese in der Abdeckstellung der Abdeckvorrichtung von der Abdeckvorrichtung teilweise umschlossen ist, insbesondere dahingehend, dass sich der Pflanzenwurzelbereich typischerweise zumindest im Wesentlichen vollständig im inneren Aufnahmevolumen der Abdeckvorrichtung befindet, wohingegen der Blätter- und/oder Blütentragende Teil der Pflanze sich außerhalb der Abdeckvorrichtung befindet. Letzteres ist wichtig, damit einerseits die betreffenden Teile der Pflanze von außen sichtbar sind, andererseits auch die Photosynthese weiterhin möglich ist. Ob das Einbringen des Pflanzenwurzelbereichs in die Abdeckvorrichtung mittels des Pflanzenwurzelbereichs und/oder mittels des Blüten- und/oder Blättertragenden Teils der Pflanze erfolgt, ist grundsätzlich unerheblich. In der Abdeckstellung befindet sich typischerweise der Pflanzenwurzelbereich zumindest im Wesentlichen vollständig im Inneren Aufnahmevolumen der Abdeckvorrichtung. Dabei befindet sich der Pflanzenwurzelbereich seinerseits typischerweise in einem Pflanzentopf bzw. Blumentopf. Dementsprechend soll es möglich sein, die Begriffe "Pflanzenwurzelbereich", "Pflanztopf", "Pflanzentopf" und "Blumentopf" zumindest weitgehend und/oder zumindest in Analogie synonym und zueinander austauschbar verwenden zu können (einschließlich der Ansprüche). Das Ausmaß der Abdeckung des Pflanztopfbereichs/Pflanzenwurzelbereichs ist jedoch aufgrund des Durchführungsbereich der Abdeckvorrichtung nicht vollständig. Der Durchführungsbereich dient der Durchführung des Pflanzenstängelbereichs, wobei "Pflanzenstängelbereich" vorliegend als eine Art pflanzliche Verbindung zwischen Pflanzenwurzelbereich und dem Blüten- und/oder Blättertragenden Teil der Pflanze zu verstehen ist. Dementsprechend kann es sich - je nach Pflanzenart - auch um eine Art Pflanzenstamm oder dergleichen handeln. Dies schließt gegebenenfalls auch mehrstämmige Pflanzen, eventuelle Stützkonstruktionen (Pflanzstäbe, Pflanzenstützstäbe und dergleichen) ein. Der Durchführungsbereich ist hinsichtlich seiner Größe derart gewählt, dass typische Pflanzen mit typischen Größen (wobei sich die erforderliche/sinnvolle Größe üblicherweise auch in Relation zur Größe des inneren Aufnahmevolumens und/oder der einzelnen Abdeckelemente bemisst) mit ihrem Pflanzenstängel von diesem aufgenommen werden können. Der zumindest eine Durchführungsbereich kann grundsätzlich eine beliebige Querschnittsform aufweisen. Typisch sind jedoch im Wesentlichen kreisrunde Durchführungsöffnungen. Dabei bezieht sich der Begriff "kreisrund" typischerweise auf die Grundform des Durchführungsbereichs. Dementsprechend ist es insbesondere aus ästhetischen oder sonstigen Gründen auch denkbar, dass die kreisrunde "Grundform" mit gewissen Unregelmäßigkeiten (beispielsweise Zacken, Vorsprüngen, Rücksprüngen und dergleichen) versehen ist. Obgleich vorliegend von zumindest zwei Abdeckelementen die Rede ist, und dementsprechend auch eine größere Anzahl als zwei Abdeckelemente vorgesehen werden kann (beispielsweise 3, 4, 5, 6, 7, 8, 9 oder 10 und auch mehr Abdeckelemente), so erweist es sich typischerweise als vorteilhaft, wenn genau zwei Abdeckelemente vorgesehen werden. Speziell in diesem Fall bezieht sich der Begriff "Abdeckelemente" auf solche Bauteile der Abdeckvorrichtung, die einen Großteil der (sichtbaren) Oberfläche der Abdeckvorrichtung ausmachen. Dementsprechend sind Bodenplatten, Befestigungsverschlüsse, zusätzliche Einrichtungen (beispielsweise elektrische Einrichtungen) und dergleichen typischerweise nicht unter den Begriff eines Abdeckelements zu subsumieren. Mit der vorgeschlagenen Abdeckvorrichtung wird einerseits der Vorteil einer besseren Ästhetik der mit der Abdeckvorrichtung versehenen Pflanze (Pflanzenwurzelbereich/Pflanztopfbereich) erzielt. Der ästhetisch in der Regel als besonders unbefriedigend empfundene Pflanztopf wird von der Abdeckvorrichtung abgedeckt. Dies betrifft typischerweise nicht nur den meist im Wesentlichen zylindrischen Außenbereich eines Pflanztopfs (Seitenwände), sondern auch zumindest größere Teile der ansonsten bei Topfpflanzen sichtbaren Erde (oder eines sonstigen Pflanzsubstrats, insbesondere im Falle von sogenannten Hydrokulturpflanzen Pflanzgranulat). Dementsprechend kann die Abdeckvorrichtung höheren ästhetischen Ansprüchen genügen. Aufgrund des im Verhältnis zu "klassischen" Übertöpfen meist erheblich kleineren Durchführungsbereichs wird darüber hinaus der Vorteil erzielt, dass eine Verdunstung von Wasser durch die Pflanzenerde deutlich verringert werden kann. Die feuchtigkeitsspeichernde Wirkung des Pflanzsubstrats (Pflanzenerde; Pflanzgranulat, und dergleichen) kann somit erhöht werden. Dementsprechend ist gegebenenfalls ein weniger häufiges Gießen ausreichend. Ein weiterer Vorteil kann darin bestehen, dass aufgrund des typischerweise vergleichweise kleinen Durchführungsbereichs und der damit veränderten Lichteintrittsverhältnisse typischerweise auch eine Ansiedlung von Moosen oder dergleichen auf der Pflanzenerde unterdrückt oder gegebenenfalls auch weitgehend verhindert werden kann. Auch dies kann sich hinsichtlich des Wasserverbrauchs als vorteilhaft erweisen. Ein weiterer Vorteil kann sich dadurch ergeben, dass die Abdeckvorrichtung auch einen gewissen thermisch isolierenden Effekt aufweist. Hierdurch können beispielsweise kurzfristige Temperatureinbrüche aufgefangen werden, und so Schäden an der Pflanze vermieden oder zumindest verringert werden. Ein typischer Fall hierfür ist das zu späte Verbringen von im Außenbereich platzierten Pflanzen ins Hausinnere während der Übergangsphasen. Lediglich der Vollständigkeit halber wird darauf hingewiesen, dass zum Gießen der in der Abdeckvorrichtung befindlichen Pflanzen unterschiedlichste Vorgehensweisen denkbar sind, wie beispielsweise teilweises Öffnen der Abdeckvorrichtung, Einbringen von Wasser durch den zumindest einen Durchführungsbereich hindurch (sofern dieser eine ausreichende Größe aufweist), Vorsehen einer speziellen Gießöffnung (was gegebenenfalls als zusätzlicher Durchführungsbereich angesehen werden kann), Verwendung von Bewässerungssystemen und dergleichen. Die Herstellung der Abdeckvorrichtung (bzw. von Teilen hiervon) kann unter Verwendung üblicher Herstellungsverfahren erfolgen. Insbesondere hat sich in ersten Versuchen ein Gießverfahren unter Verwendung von Gussformen, bzw. ein Spritzgussverfahren unter Verwendung von Spritzgussformen als vorteilhaft erwiesen. Die (Spritz-) Gussformen können insbesondere unter Verwendung eines Prototyps, insbesondere eines mittels 3-D-Drucks gefertigten Prototyps, hergestellt werden. Selbstverständlich sind auch andere Herstellungsverfahren möglich, wie beispielsweise unmittelbarer 3-D-Druck, aber auch übliche, abrasive Fertigungstechniken.

Vorteilhaft ist es, wenn die Abdeckvorrichtung vorzugsweise (genau) zwei Abdeckelemente aufweist, welche unabhängig voneinander handhabbar sind. Vorzugsweise sind diese mittels Magnetbefestigungsvorrichtungen und/oder mechanischer Einrastvorrichtungen reversibel und wiederholbar aneinander befestigbar. Werden lediglich zwei Abdeckelemente vorgesehen (gegebenenfalls auch 3, 4, 5 oder 6 usw.) kann die Anzahl der erforderlichen Handhabungsschritte zum Verbringen der Abdeckvorrichtung in die Abdeckstellung bzw. in die Einbringstellung in aller Regel verringert werden. Dementsprechend vereinfacht sich die Handhabung der Vorrichtung. Hierbei wird darauf hingewiesen, dass speziell bei entsprechend groß dimensionierten Abdeckvorrichtungen eine Anzahl von 3, 4, 5 oder 6 Abdeckelementen (gegebenenfalls auch mehr) auch von Vorteil sein kann, weil auf diese Weise die Größe und/oder das Gewicht eines einzelnen Abdeckelemente verringert werden kann, was sich gegebenenfalls vorteilhaft auf die Handhabbarkeit der Abdeckvorrichtung auswirken kann. Ein besonders einfache, schnelle und für den Benutzer besonders intuitive Art der Befestigung kann sich bei Verwendung von Magnetbefestigungsvorrichtungen und/oder mechanischer Einrastvorrichtungen ergeben. Magnetbefestigungsvorrichtungen können dabei jeweils zwei Magnete (insbesondere Permanentmagnete) aufweisen, aber auch einen (Permanent-)Magnet und einen korrespondierenden ferromagnetischen Materialbereich (zum Beispiel Eisenscheibe) aufweisen. Auch Kombinationen sind natürlich denkbar. Bei mechanischen Einrastvorrichtungen ist insbesondere an ein einschnappartiges bzw. ein clipsartiges Verrasten zu denken (wobei die Clipse bzw. Verschlüsse sinnvollerweise keinen Widerhakenbereich oder dergleichen aufweisen sollten, sodass diese reversibel und wiederholt miteinander befestigt werden und/oder voneinander getrennt werden können. Selbstverständlich sind auch Mischformen aus unterschiedlichen mechanischen Einrastvorrichtungen bzw. aus mechanischen Einrastvorrichtungen und Magnetbefestigungsvorrichtungen denkbar.

Von Vorteil ist es, wenn die zumindest zwei Abdeckelemente zumindest teilweise zumindest eine nicht-geradlinige Verbindungskante aufweisen, insbesondere eine gewellte und/oder gezackte Verbindungskante. Es hat sich gezeigt, dass die Verbindungskante(n) der in der zumindest einen Einbringstellung miteinander verbundenen Abdeckelemente dann typischerweise vergleichsweise schlecht erkennbar ist, sodass sich eine verbesserte Ästhetik ergeben kann.

Vorteilhaft ist es weiterhin, wenn zumindest eines der zumindest zwei Abdeckelemente zumindest bereichsweise als Hartschalenelement ausgebildet ist. Dies hat sich hinsichtlich der Funktionalität und Handhabbarkeit der Abdeckvorrichtung als typischerweise vorteilhaft erwiesen. Vorzugsweise ist die Mehrzahl der zumindest zwei Abdeckelemente, bzw. sind (im Wesentlichen) alle der zumindest zwei Abdeckelemente zumindest bereichsweise als Hartschalenelement ausgebildet. Die als Hartschalenelement ausgebildeten Bereiche des bzw. der Abdeckelemente betreffen dabei vorzugsweise vergleichsweise große, die Mehrzahl der bzw. (im Wesentlichen) den gesamten Flächenbereich des betreffenden Abdeckelements. Dabei ist darauf hinzuweisen, dass der Begriff "Flächenbereich" nicht notwendigerweise einen Oberflächenbereich der betreffenden Abdeckelemente bzw. der Abdeckvorrichtung bezeichnet. Dementsprechend ist insbesondere ein hinsichtlich der Tiefe gestaffelter Aufbau des bzw. der Abdeckelemente möglich (beispielsweise das Vorsehen einer harten Stützstruktur, die zum Beispiel einseitig mit einer vergleichsweise weichen Oberfläche beschichtet ist). Auch hierdurch kann die Funktionalität und/oder die Handhabbarkeit der Abdeckvorrichtung oftmals gefördert werden.

Weiterhin wird vorgeschlagen, dass bei der Abdeckvorrichtung zumindest eines der zumindest zwei Abdeckelemente zumindest bereichsweise aus einem thermisch isolierenden Material ausgebildet ist oder ein thermisch isolierendes Material aufweist. Zusätzlich oder alternativ ist es auch möglich, dass bei der Abdeckvorrichtung zumindest eines der zumindest zwei Abdeckelemente zumindest bereichsweise aus einem feuchtigkeitsspeichernden Material ausgebildet ist oder ein feuchtigkeitsspeicherndes Material aufweist. Bei thermisch isolierenden Materialien können insbesondere Frostschäden, gegebenenfalls aber auch Pflanzenschäden infolge von zu großer Hitze (beispielsweise durch starke Sonneneinstrahlung) verringert oder sogar verhindert werden. Selbstverständlich gilt dies nicht notwendigerweise über beliebige Zeiträume hinweg. Es ist jedoch darauf hinzuweisen, dass sich beispielsweise in der Übergangszeit Minusgrade oftmals auf wenige Stunden bzw. auch auf nur auf Teile einer Stunde beschränken, wohingegen während der sonstigen Zeit des Tages ausreichend hohe Plusgrade (oberhalb des Gefrierpunkts von Wasser) vorhanden sind. In Bezug auf zu große Hitze ist auf eine typische Situation hinzuweisen, bei der eine Pflanze aufgrund der Positionierung zwar die meiste Zeit im Schatten steht, jedoch während einer vergleichsweise kurzen Phase im Tagesverlauf im prallen Sonnenlicht stehen kann. Für diese Zeitdauer kann die vorgeschlagene Abdeckvorrichtung oftmals einen vorteilhaften Schutz gegen Überhitzung und/oder Austrocknung bieten. Dementsprechend kann auch ein vergleichsweise kurzzeitiger Temperaturschutz überaus vorteilhaft sein, insbesondere auch in Bezug auf eine Schutzwirkung sowohl in Bezug auf zu niedrige, als auch in Bezug auf zu hohe Temperaturen. Bei Ausbildung von zumindest Teilen der Abdeckvorrichtung aus feuchtigkeitsspeicherndem Material (bzw. dem Vorsehen von solchem Material) kann typischerweise ein Austrocknen der Pflanze effektiv verhindert werden, sodass auch diesbezügliche Schäden verringert oder auch verhindert werden können. Auch ist es dadurch in der Regel möglich, dass seltener gegossen werden muss (bzw. bei einem Gießvorgang größere Mengen Wasser eingebracht und gespeichert werden können).

Ein weiterer Vorteil der Abdeckvorrichtung kann sich ergeben, wenn zumindest eines der zumindest zwei Abdeckelemente zumindest bereichsweise ein naturmaterialartiges Aussehen und/oder eine naturmaterialartige Formgebung aufweist. Dies kann insbesondere für einen Außenseitenbereich der Abdeckvorrichtung gelten, da diese üblicherweise den von außen sichtbaren Bereich darstellt, wenn sich die Abdeckvorrichtung in der Abdeckstellung befindet. Um welche Art von Naturmaterial es sich handelt, ist jedoch grundsätzlich beliebig. Als vorteilhaft hat es sich jedoch erwiesen, wenn das Aussehen und/oder die Formgebung weitgehend einem Stein entsprechen, wobei typischerweise Gesteinsarten verwendet werden, die für eine bestimmte Region üblich sind und/oder die für Pflanzenansiedlungen typisch sind und/oder vom Benutzer der Abdeckvorrichtung als besonders ästhetisch empfunden werden. Rein beispielhaft kann es sich hierbei um Sandstein (rein beispielhaft: roter Buntsandstein), granitische Gesteine, basaltische Gesteine, magmatische Gesteine, Silikatgesteine, geschichtete Gesteine, Schiefergesteine, Konglomeratgesteine, gegebenenfalls auch Variationen hiervon, handeln. Gegebenenfalls ist es aber auch denkbar, dass ein vollständig unterschiedliches Aussehen und/oder eine vollständig unterschiedliche Formgebung gewählt werden. Rein beispielsweise ist hier an eine Art Pop-Art-Übertopf, auf einen Werbeträger (Beschriftung mit entsprechenden Logos und/oder Schriftzügen) oder dergleichen zu denken. Gegebenenfalls kann sich auch eine beispielsweise metallartig, holzartig und dergleichen anmutende Oberfläche als besonders ästhetisch erweisen.

In ersten Versuchen hat es sich als vorteilhaft erwiesen, wenn bei der Abdeckvorrichtung ein Durchführungsbereich mit einem Durchmesser zwischen 2 und 8 cm, vorzugsweise zwischen 3 und 7 cm, bevorzugt zwischen 4 und 6 cm vorgesehen wird. Ober- und Untergrenzen können jedoch beliebig miteinander kombiniert werden. Mit der vorgeschlagenen Dimensionierung kann in der Regel ein besonders guter Kompromiss zwischen möglichst universeller Verwendbarkeit der Abdeckvorrichtung (insbesondere Verwendbarkeit für möglichst viele unterschiedliche, beliebte Pflanzen) und nach wie vor guter Funktionalität (Schutz vor Austrocknung, thermischer Schutz, Ästhetik) realisiert werden.

Weiterhin kann es sich als vorteilhaft erweisen, wenn bei der Abdeckvorrichtung zumindest eines der zumindest zwei Abdeckelemente zumindest teilweise ein Material aufweist, welches der Gruppe Dämmschaum, Hartschaum, Polyurethanschaum, Glasfasergewebe, Mörtel, Fliesenkleber, Mehrkomponentenklebstoff, Farbpigmente, Naturmaterialpartikel, Folien, Beschichtungsfolien, bedruckte Folien und Wassertransferdruckfolien entnommen ist. Mit derartigen Materialien können die im Zusammenhang mit der Erfindung beschriebenen Vorteile und Eigenschaften in der Regel besonders gut realisiert werden. Insbesondere bei Verwendung von bedruckten Folien mit hoher Abdeckkraft kann ein Durchscheinen des Grundmaterials besonders vorteilhaft vermieden werden und/oder ein besonders positiver ästhetischer Eindruck, oftmals in Kombination mit einer kostengünstigen Herstellung, realisiert werden. Bei Verwendung von (bedruckten) Folien hat sich insbesondere die Verwendung von sogenannten Wassertransferdruckfolien als überraschend vorteilhaft erwiesen. Einerseits kann hier auf vergleichsweise einfache Weise ein Auftrag der Folie, insbesondere auch auf einen unregelmäßig geformten Grundkörper (was bei der vorliegend vorgeschlagenen Abdeckvorrichtung oftmals die Regel ist), auf einfache Weise realisiert werden. Darüber hinaus hatte sich in ersten Versuchen herausgestellt, dass Wassertransferdruckfolien eine überraschend starke Haftwirkung auf dem im Rahmen dieser Offenbarung vorgeschlagenen Polyurethanschaummaterial (insbesondere bei dessen Verwendung als Grundkörper) aufweisen. Hierdurch kann der Anteil an Ausschuss bei der Produktion verringert werden und die Haltbarkeit der Abdeckvorrichtung besonders vorteilhaft gefördert werden.

Vorgeschlagen wird auch, dass bei der Abdeckvorrichtung zumindest ein Dekorelement und/oder zumindest eine elektrische Einrichtung, insbesondere eine Beleuchtungseinrichtung, vorgesehen wird. Hierdurch kann die Abdeckvorrichtung gegebenenfalls besonders hohen ästhetischen Ansprüchen genügen. Auch kann gegebenenfalls eine Art Werbeeffekt erzielt werden bzw. auf bestimmte Ereignisse eingegangen werden. Rein Beispielshaft kann ein herzartiges Dekorelement bei einer zum Valentinstag verschenkten Abdeckvorrichtung besonders große Freude beim Beschenkten hervorrufen. Die Größe und/oder Art der elektrischen Einrichtung kann grundsätzlich beliebig sein. Die bereits erwähnte Beleuchtungseinrichtung kann sich auf ästhetische Aspekte beziehen, zusätzlich oder alternativ aber auch auf eine das Pflanzenwachstum fördernde Beleuchtungseinrichtung. Weitere elektrische Einrichtungen sind darüber hinaus denkbar, wie beispielsweise eine Heizvorrichtung, eine Bewegungsvorrichtung und dergleichen.

Weiterhin wird vorgeschlagen, dass die Abdeckvorrichtung in ihrer Abdeckstellung unten offen ist und/oder die Abdeckelemente einen Aufnahmebereich zur Aufnahme eines Bodenelements aufweisen. Ein derartiger Aufbau hat sich als in der Regel besonders geeignet erwiesen. Einerseits können hierdurch die Herstellungskosten verringert werden, andererseits aber auch die Handhabbarkeit der Abdeckvorrichtung verbessert werden. Dennoch ist - insbesondere im Falle eines Aufnahmebereichs zur Aufnahme eines Bodenelements - das Vorsehen einer zusätzlichen Funktionalität für die Abdeckvorrichtung möglich, gegebenenfalls auch als eine Art Nachrüstlösung. Bei dem Aufnahmebereich zur Aufnahme eines Bodenelements kann sich beispielsweise um eine Art Nut handeln, in die ein entsprechend ausgebildeter hervorstehender Rand eines Bodenelements eingebracht werden kann. Bei der vorliegend vorgeschlagenen Ausbildungsform ist es insbesondere möglich, dass die Abdeckvorrichtung bzw. Teile hiervon (insbesondere die Abdeckelemente) unabhängig von der Pflanze (die typischerweise ein vergleichsweise hohes Gewicht aufweist) gehandhabt werden können, selbst dann, wenn ein Bodenelement vorgesehen wird. Der Vollständigkeit halber wird darauf hingewiesen, dass beim Vorhandensein eines Bodenelements, die Pflanze (einschließlich Blumentopf) typischerweise auf dem Bodenelement steht, wenn die Abdeckelemente der Abdeckvorrichtung zusammengefügt werden. Dementsprechend ist das Gesamtgewicht aus Pflanze, mit Blumenerde gefülltem Blumentopf und Bodenplatte in aller Regel vergleichsweise hoch.

Weiterhin wird vorgeschlagen, dass bei der Abdeckvorrichtung eine Drehtellervorrichtung vorgesehen ist. Die Drehtellervorrichtung kann insbesondere auch (Teil) eines Bodenelements sein. Mit einer Drehtellervorrichtung ist es möglich, dass die Pflanze gedreht werden kann. Die Drehgeschwindigkeit kann dabei so bemessen sein, dass sie von einem Betrachter registriert wird (ästhetische Aspekte); ebenso ist es aber auch möglich, dass die Drehung so langsam geschieht, dass die Drehung der Förderung eines möglichst symmetrischen Wachstums der Pflanze dient (beispielsweise Vollumdrehung alle 12 Stunden oder dergleichen).

Weitere Vorteile, Eigenschaften und Aufgaben der Erfindung ergeben sich aus der folgenden eingehenden Beschreibung der Erfindung in Kombination mit den zugehörigen Zeichnungen, wobei die Zeichnungen zeigen:
- Fig. 1:: eine Blumentopfabdeckung in Abdeckposition mit darin befindlicher Pflanze in schematischer, perspektivischer Ansicht;
- Fig. 2:: eine zwei Abdeckelemente aufweisende Blumentopfabdeckung in einer Einbringstellung in schematischer perspektivischer Ansicht.

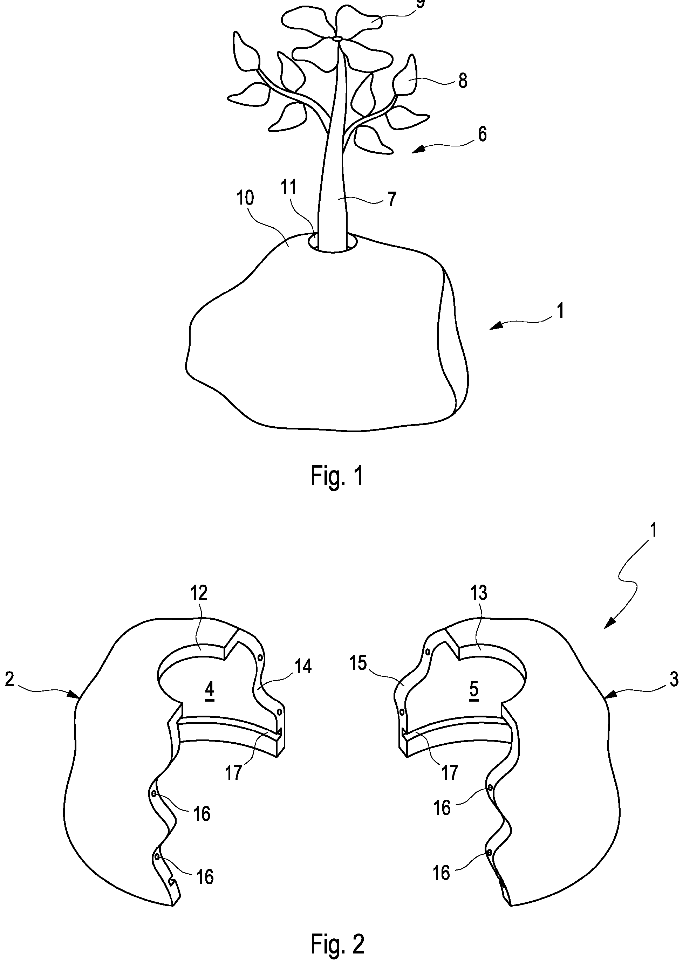

In Fig. 1 ist eine Blumentopfabdeckung 1 in einer schematischen perspektivischen Darstellung gezeigt. Die Blumentopfabdeckung 1 besteht aus vorliegend zwei Abdeckteilen 2, 3 (siehe Fig. 2), die in ihrem Inneren jeweils einen Teilhohlraum 4, 5 aufweisen. Sind die beiden Abdeckteile 2, 3 in der in Fig. 1 dargestellten zusammengesetzten Abdeckposition, ergibt sich hieraus ein inneres (Gesamt-)Volumen (nicht sichtbar), das sich aus den beiden Teilhohlräumen 4, 5 zusammensetzt.

Im inneren Volumen befindet sich vorliegend ein handelsüblicher Blumentopf (ebenfalls nicht dargestellt), der mit einem Pflanzsubstrat wie, beispielsweise Blumenerde oder einem Tongranulat (insbesondere bei Hydrokulturen verwendet), befüllt ist. Das Pflanzsubstrat dient zur Aufnahme des Wurzelbereichs der in Fig. 1 sichtbaren Pflanze 6. Bei der Pflanze 6 sind vorliegend nur der Pflanzenstängel 7, sowie die Blätter 8 und vorliegend eine Blüte 9 erkennbar. Die Pflanze 6 selbst ist nur beispielhaft gezeigt. Stattdessen kann auch eine andere Art von Pflanze (einschließlich Kunstpflanzen) verwendet werden.

Weiterhin ist im oberen Bereich 10 der Blumentopfabdeckung 1 eine Durchgangsöffnung 11 zu erkennen. Die Durchgangsöffnung 11 ist vorliegend als kreisrunde Öffnung ausgebildet. Die Durchgangsöffnung 11 ist derart angeordnet, dass jeweils ein etwa hälftiges Kreissegment 12, 13 in den beiden Abdeckteile 2, 3 ausgeschnitten ist.

Wie in Fig. 1 gut zu erkennen ist, weist die Durchgangsöffnung 11 eine Größe auf, die so gewählt ist, dass ein Pflanzenstängel 7 einer im Wesentlichen beliebigen Pflanzenart hindurchgeführt werden kann. Im vorliegend dargestellten Beispiel beträgt der Durchmesser der Durchgangsöffnung 11 5 cm. Dabei ist darauf hinzuweisen, dass die Größe der Durchgangsöffnung 11 sinnvollerweise mit der Größe des inneren Volumens (gebildet aus den beiden Teilhohlräumen 4, 5) korrespondiert. Der innere Hohlraum ist sinnvollerweise derart gestaltet, dass typische, genormte Blumentopfgrößen von diesem aufgenommen werden können. Im vorliegenden Beispiel wird ein Blumentopf mit 14 cm Durchmesser von der Blumentopfabdeckung 1 aufgenommen.

Im vorliegend dargestellten Ausführungsbeispiel besteht die Blumentopfabdeckung 1 aus zwei Abdecktteilen 2, 3, was gut in Fig. 2 zu erkennen ist. Fig. 2 zeigt die beiden Abdeckteile 2, 3 in einer geöffneten Stellung. Wie leicht einsichtig, können die beiden Abdeckteile 2, 3 mit ihren Kreissegmenten 12,13 von zwei einander gegenüberliegenden Seiten aus über den Blumentopf der in einem Blumentopf befindlichen Pflanze 6 gestülpt werden, wobei der Pflanzenstängel 7 in den beiden Kreissegmenten 12, 13, die im zusammengesetztem Zustand (Fig. 1) die Durchgangsöffnung 11 bilden, aufgenommen wird.

Die Abdeckteile 2, 3 bestehen jeweils aus einem geeignet geformten Mantel mit einer Dicke von vorliegend etwa 2 cm.

An den Stirnseiten der Abdeckteile 2, 3 befindet sich jeweils eine Stirnkante 14, 15. Die Formgebung der Stirnkanten 14, 15 ist formkomplementär gewählt, sodass sich nach dem Zusammenfügen der beiden Abdeckteile 2, 3 keine größeren Spalte bilden. Vielmehr liegen die beiden Stirnkanten 14, 15 im Wesentlichen bündig aneinander an.

Wie man Fig. 2 entnehmen kann, verlaufen die Stirnkanten 14, 15 nicht längs einer Ebene, sondern vielmehr sind diese entlang einer gewellten Linie bzw. längs einer gezackten Linie angeordnet. Eine derartige Ausbildung hat den Vorteil, dass im zusammengefügten Zustand (Abdeckstellung) die Verbindungslinie schlechter zu erkennen ist, sodass die zusammengesetzte Blumentopfabdeckung 1 einen ästhetisch hochwertigeren Eindruck macht.

Im vorliegend dargestellten Ausführungsbeispiel halten im korrekt zusammengesetzten Zustand der Blumentopfabdeckung 1 die Abdeckteile 2, 3 mittels magnetischer Kräfte zusammen. Hierdurch wird ein leichtes und intuitives wiederholt reversibles Öffnen und Schließen der Blumentopfabdeckung 1 ermöglicht. Zur Erzeugung der magnetischen Kräfte dienen vorliegend mehrere Permanentmagnete 16, die im Bereich der Stirnkanten 14, 15 der beiden Abdeckteile 2, 3 vorgesehen sind.

Weiterhin ist in Fig. 2 im Bereich der Teilhohlräume 4, 5 auf der jeweiligen Innenseite der Abdeckteile 2, 3 eine Nut 17 vorgesehen. Die Nut 17 verläuft in einer im Wesentlichen konstanten Höhe (beispielsweise 2 cm von der Unterkante der Abdeckteile 2, 3 entfernt) an der Innenseite der beiden Abdeckteile 2, 3 entlang. Die Nut 17 ermöglicht es, dass beispielsweise ein Bodenteil eingebracht werden kann. Das Bodenteil sollte insbesondere in einem solchen Fall einen im Querschnitt T-artigen Aufbau aufweisen. Mit anderen Worten sollte es sich um zwei aufeinander gestapelte Scheiben mit unterschiedlichem Durchmesser handeln, wobei die untere Scheibe kleiner als die obere Scheibe sein sollte. Die obere Scheibe kann dann mit ihrem Rand in die Nut 17 eingreifen. Selbstverständlich sollte die Dicke der unteren Scheibe so gewählt werden, dass die obere Scheibe im Wesentlichen auf der Höhe der Nut 17 zu liegen kommt. Die Scheiben können selbst verständlich auch einstückig bzw. einteilig ausgebildet sein.

Die beiden Abdeckteile 2, 3 sind vorliegend aus einem Hartschaummaterial, insbesondere Polyurethanschaum, gebildet. Ein solches Material ist leicht, weist eine für den vorliegenden Einsatzzweck gut ausreichende Festigkeit auf, ist kostengünstig erhältlich, gut in unterschiedlichen Formen verbringbar (insbesondere durch Verwendung entsprechender Gießformen) und hat darüber hinaus noch gute thermisch isolierende Eigenschaften.

Die Außenseite der Abdeckteile 2, 3 kann mit einer Mischung aus Zweikomponentenkleber und Fliesenmörtel bestrichen werden, wobei noch eine Deckschicht auf die Außenseite aufgebracht werden kann. Die Deckschicht kann beispielsweise Sandpartikel aufweisen (insbesondere bei einer Sandsteinimitation), und mit entsprechenden Farbpigmenten versehen sein, sodass sich ein entsprechender Gesamteindruck ergibt.

Selbstverständlich sind auch andere Arten von Deckschichten denkbar.

Insbesondere hat sich die Verwendung von sogenannten Wassertransferdruckfolien als besonders vorteilhaft erwiesen. Derartige Wassertransferdruckfolien werden - in an sich bekannter Weise - in einem Wasserbad von ihrem Trägermaterial gelöst. Die Folie schwimmt anschließend frei auf dem Wasserbad auf. Die Beschichtung des zu beschichtenden Körpers 1, 2, 3 (also der Blumentopfabdeckung 1 oder eines Teils hiervon, bzw. eines der oder der Abdeckteile 2, 3) erfolgt durch geeignetes Eintauchen desselben/derselben in das Wasserbad im Bereich der freischwimmenden Wassertransferdruckfolie. Das Verfahren hat sich in ersten Versuchen insbesondere auch bei vergleichsweise unregelmäßig geformten Körpern bewährt - eine Formgebung die zumindest für eine Mehrzahl der vorliegend vorgeschlagenen Blumentopfabdeckungen 1 (bzw. Abdeckteile 2, 3) die Regelform darstellt. Es hat sich dabei überraschenderweise herausgestellt, dass im Stand der Technik bekannte, insbesondere handelsübliche, Wassertransferdruckfolien eine überraschend hohe Haftwirkung auf Polyurethanschaum (der im Rahmen der vorliegenden Offenbarung als besonders geeignetes Grundmaterial zur Ausbildung der Grundkörper eines Abdeckteils 2, 3, bzw. der Abdeckteile 2, 3 vorgeschlagen wird) aufweisen. Hierdurch kann insbesondere eine besondere Langlebigkeit des resultierenden Produkts auf einfache Weise realisiert werden.

Bevorzugt ist es, wenn die Deckschicht und die Formgebung der Blumentopfabdeckung 1 so gewählt sind, dass sich eine steinartige Gesamtanmutung der Blumentopfabdeckung 1 ergibt. Es sieht also so aus, als ob die Pflanze "unmittelbar aus einem Stein herauswächst". Als mögliche Gesteinsarten können beispielsweise Sandstein (rein beispielhaft: roter Buntsandstein), granitische Gesteine, basaltische Gesteine, magmatische Gesteine, Silikatgesteine, geschichtete Gesteine, Schiefergesteine, Konglomeratgesteine und dergleichen verwendet werden.

Aufgrund der thermischen Isolationseigenschaften kann ein gewisser Schutz des Wurzelbereichs der Pflanze 6 mithilfe der Blumentopfabdeckung 1 sichergestellt werden (insbesondere gegenüber Unterkühlung und/oder Überhitzung). Es hat sich gezeigt, dass die Erde im von der Blumentopfabdeckung 1 aufgenommenen Blumentopf vor direkter Sonneneinstrahlung geschützt ist, und dementsprechend länger kühl und feucht bleibt. Da darüber hinaus eine Verdunstung von Wasser aus der Pflanzenerde heraus eingeschränkt ist (bedingt durch die vergleichsweise kleine Durchgangsöffnung 11, die darüber hinaus noch teilweise vom Pflanzenstängel 7 eingenommen wird), bleibt die Erde deutlich länger feucht. In ersten Versuchen hat sich gezeigt, dass im Sommer eine Feuchtigkeitsspeicherung von bis zu zwei Wochen realistisch ist. Dementsprechend muss die Pflanze seltener gegossen werden und Trockenschäden sind dementsprechend weniger wahrscheinlich.

Im Winter können die thermischen Isolationseigenschaften der Abdeckteile 2, 3 einen Schutz vor kaltem Wind und insbesondere auch vor Schnee in einem erheblichen Umfang gewährleisten. Der Blumentopf bleibt somit länger wärmer und Frost kann bis zu einem gewissen Umfang abgehalten werden.

Obgleich vorliegend für die Abdeckteile 2, 3 eine Dicke von etwa 2 cm vorgeschlagen wurde, können selbstverständlich auch andere Dicken für die Abdeckteile 2, 3 gewählt werden. Insbesondere können Bereiche zwischen 0,5 cm, 1 cm, 1,5 cm, 2 cm, 2,5 cm (unterer Bereich) und 1 cm, 1,5 cm, 2 cm, 2,5 cm und 3 m (oberer Bereich) vorgesehen werden.

Es sollte nicht unerwähnt bleiben, dass bei Verwendung geeigneter Materialien (insbesondere auch bei Verwendung einer zusätzlichen inneren Zusatzschicht) die Blumentopfabdeckung 1 auch nicht unerhebliche wasserspeichernde Eigenschaften aufweisen kann. Hierdurch können Gießerfordernisse gegebenenfalls nochmals verringert werden.

## Patentansprüche

1. Abdeckvorrichtung (1) für Pflanzenwurzelbereiche, aufweisend zumindest zwei Abdeckelemente (2, 3), welche in zumindest eine Einbringstellung (Fig. 2) für den Pflanzenwurzelbereich und in zumindest eine Abdeckstellung (Fig. 1) für den Pflanzenwurzelbereich verbringbar sind, wobei die Abdeckvorrichtung in der Abdeckstellung zumindest ein inneres Aufnahmevolumen (4, 5) für den Pflanzenwurzelbereich und zumindest einen Durchführungsbereich (11) für einen Pflanzenstängelbereich (7) aufweist.

2. Abdeckvorrichtung (1) nach Anspruch 1, aufweisend vorzugsweise zwei Abdeckelemente (2, 3), welche unabhängig voneinander handhabbar sind, und vorzugsweise mittels Magnetbefestigungsvorrichtungen (16) und/oder mechanischer Einrastvorrichtungen reversibel und/oder wiederholt aneinander befestigbar sind.

3. Abdeckvorrichtung (1) nach Anspruch 1 oder 2, **dadurch gekennzeichnet, dass** zumindest eines der zumindest zwei Abdeckelemente (2, 3) zumindest bereichsweise als Hartschalenelement (2, 3) ausgebildet ist.

4. Abdeckvorrichtung (1) nach einem der vorangehenden Ansprüche, **dadurch gekennzeichnet, dass** zumindest eines der zumindest zwei Abdeckelemente (2, 3) zumindest bereichsweise aus einem thermisch isolierenden Material ausgebildet ist oder ein thermisch isolierendes Material aufweist und/oder zumindest bereichsweise aus einem feuchtigkeitsspeichernden Material ausgebildet ist oder ein feuchtigkeitsspeicherndes Material aufweist.

5. Abdeckvorrichtung (1) nach einem der vorangehenden Ansprüche, **dadurch gekennzeichnet, dass** zumindest eines der zumindest zwei Abdeckelemente (2, 3) zumindest bereichsweise, insbesondere auf einem Außenseitenbereich, ein naturmaterialartiges Aussehen und/oder eine naturmaterialartige Formgebung aufweist.

6. Abdeckvorrichtung (1) nach einem der vorangehenden Ansprüche, **gekennzeichnet durch** einen Durchführungsbereich (11) mit einem Durchmesser zwischen 2 und 8 cm, vorzugsweise zwischen 3 und 7 cm, bevorzugt zwischen 4 und 6 cm.

7. Abdeckvorrichtung (1) nach einem der vorangehenden Ansprüche, **dadurch gekennzeichnet, dass** zumindest eines der zumindest zwei Abdeckelemente (2, 3) zumindest teilweise ein Material aufweist, welches der Gruppe Dämmschaum, Hartschaum, Polyurethanschaum, Glasfasergewebe, Mörtel, Fliesenkleber, Mehrkomponentenklebstoff, Farbpigmente, Naturmaterialpartikel, Folien, Beschichtungsfolien, bedruckte Folien und Wassertransferdruckfolien entnommen ist.

8. Abdeckvorrichtung (1) nach einem der vorangehenden Ansprüche, **gekennzeichnet durch** zumindest ein Dekorelement und/oder zumindest eine elektrische Einrichtung, insbesondere eine Beleuchtungseinrichtung.

9. Abdeckvorrichtung (1) nach einem der vorangehenden Ansprüche, **dadurch gekennzeichnet, dass** die Abdeckvorrichtung (1) in ihrer Abdeckstellung (Fig. 1) unten offen ist und/oder die Abdeckelemente (2, 3) einen Aufnahmebereich (17) zur Aufnahme eines Bodenelements aufweisen.

10. Abdeckvorrichtung nach einem der vorangehenden Ansprüche, insbesondere nach Anspruch 9, **dadurch gekennzeichnet, dass** eine Drehtellervorrichtung vorgesehen ist.
